# EUROPEAN PATENT APPLICATION

(11) **EP 3 309 280 A1**
(43) Date of publication of application: **18.04.2018**
(21) Application number: 16892760.6
(22) Date of filing: 29.02.2016
(51) Int. Cl.: D01D 5/34, D01F 8/14

(54) **LOW MELTING POINT CONJUGATE FIBER**

(71) Applicant: HUVIS Co., Ltd., Seoul 06060 (KR)
(72) Inventor: JANG, Boo Kyeong, Daejeon 34016 (KR); SHIN, Hyun Wook, Anyang-si Gyeonggi-do 13943 (KR); PARK, Seong Yoon, Daejeon 34061 (KR); HO, Yo Seung, Daejeon 34022 (KR)
(74) Representative: Lezsák, Gábor
(86) International application number: PCT/KR2016/002041
(87) International publication number: WO 2017/150747

(57) **Abstract**

The present disclosure relates to a low-melting conjugate fiber prepared by complex radiation of: a general polyester as a core component; and a copolymer polyester resin for a low-melting binder prepared by copolymerizing an acid component composed of terephthalic acid and isophthalic acid or an ester-forming derivative thereof as a sheath component and a diol component composed of 2-methyl-1,3-propanediol, diethylene glycol, and ethylene glycol.

## Description

### Technical Field

The present disclosure relates to a low-melting conjugate fiber, and more particularly, to a low-melting conjugate fiber excellent in thermal adhesion property and form stability and having a low content of a cyclic compound in a resin.

### Background Art

Generally, padding products for clothes are manufactured by laminating several fold carding web products in a machine direction and a half machine direction by carding short fibers, and then making them into nonwoven fabric having an interfiber adhesive property between the fibers as an adhesive material (binder). Such a nonwoven fabric is largely manufactured by two methods. One method is to apply and adhere it on the surface of nonwoven fibers by dissolving polyvinyl alcohol or acrylic resin in a solvent after carding short fibers in order to impart adhesion property. Another method is to adhere constituent fibers through heat treatment after mixing the prepared binder fibers at the time of carding by performing complex radiation in the same system or sheath-core form with a low melting point of certain ratios in a matrix fiber.

However, the spraying method of dissolving the former polyvinyl alcohol or acrylic resin in the solvent does not penetrate the binder deeply into the inside of the web, and moreover, due to the problems such as the environmental pollution caused by the use of the solvent and the low compatibility with the polyester which becomes the matrix, it is limited to use only for a clothing wick which simply bonds the surface of the nonwoven fabric. Also, it has a disadvantage that it is not used for a product which requires a high strength due to a low adhesiveness and a rough feeling. In addition, organic solvents used in this process are mostly highly volatile and harmful to the human body, and when they are used as molding nonwoven fabrics, there is a disadvantage that solvent and resin are smeared in a mold.

Meanwhile, the latter method which does not use the solvent has a great advantage that the adhesion is instantaneously completed by heating, and thus it is currently widely used in the field of fiber adhesion, since it greatly contributes to the rationalization of the bonding process, labor saving, and acceleration. However, this latter method has good compatibility among fibers, but due to the high melting point of polyester, it is necessary to copolymerize the different components into the polyester to lower the melting point. That is, the polyester which is an existing matrix and the same or different kinds of polymers having a low-melting point are melted and adhered by heat treatment after mixing them with an aid of complex radiation in a sheath-core form.

For example, U.S. Patent No. 3,989,788 discloses a method of using copolymer polyester binder fibers to firmly manufacture nonwoven webs and sheets. In this US patent, characteristics as a copolymer binder are given by changing a predetermined terephthalic acid repeating unit of polyethylene terephthalic acid to isophthalic acid unit. In addition, disclosed is a method of using aromatic dicarboxylic acids such as isophthalic acid and phthalic acid or adipic acid and sebacic acid as aliphatic dicarboxylic acids and ethylene glycol and hexanediol as diol components in addition to terephthalic acid as dicarboxylic acid.

In addition, U.S. Patent No. 4,129,675 discloses a low-melting copolymer polyester copolymerized with terephthalic acid and isophthalic acid. However, the copolymer polyester of this patent has the disadvantage of consuming a lot of energy in the process because it can be thermally fused at a high temperature of 190°C or higher.

The above-mentioned US patents are characterized in that terephthalic acid and isophthalic acid are copolymerized. However, in the polyester resin for binder using isophthalic acid, a cyclic compound having a degree of polymerization of 2 or 3 as shown in the following formula is formed at the time of synthesis.

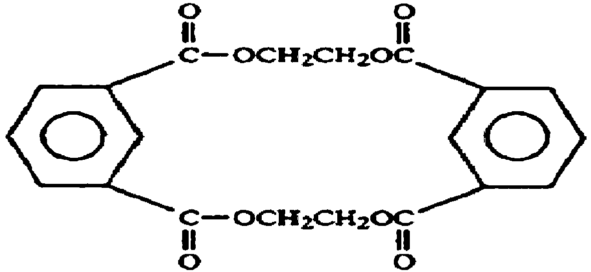

The price of isophthalic acid is expensive, and moreover, the cyclic compound of the above formula formed by isophthalic acid has a melting point of up to 325°C. Thus, it acts as foreign substances during radiation. The generation of such a foreign substance shortens the replacement cycle of a pack, which serves as a filter, which leads to a problem such that the pack needs to be frequently replaced.

Meanwhile, U.S. Patent No. 4,065,439 discloses a low-melting copolymer polyester copolymerized with terephthalic acid/isophthalic acid/adipic acid (or sebacic acid) and ethylene glycol/neopentyl glycol. Since the copolymer polyester according to this U.S. patent has a glass transition temperature of 45 to 60°C, when the product is transported by a container, it is often placed at a high temperature, so that there is a likelihood that thermal fusion may occur in the article including the copolymer polyester component. Further, even when the polyester component is used as a component for bonding, there is a problem that the strength is weak due to the same problem.

As described above, the raw material components of the copolymer polyester according to the prior art have disadvantages in that they act as defects in the molecular chain of the polyester after copolymerization, or act as a molecular chain structure which is not linear, resulting in lowering of crystallization and strength. Further, when such a copolymer polyester is used in the production of the binder fiber, the crystallization is lowered, and after the nonwoven fabric is produced, the nonwoven fabric loses its role as a binder at a temperature higher than the softening point. Thus, there is a problem in that the tear property of the nonwoven fabric is remarkably reduced at a temperature higher than the softening point, and thus it is not suitable for use as a garment, an automobile interior product, or a molding nonwoven fabric.

In order to solve the problems of the prior art as described above, the present inventors have developed a copolymer polyester resin for a low-melting binder of the present disclosure which has a low content of a cyclic compound acting as a foreign substance and has an excellent adhesive force even at a low temperature of 180°C or lower in a copolymer polyester resin for a low-melting binder, and developed a polyester-based binder conjugate fiber excellent in thermal fusion at low temperature by using this resin.

### Disclosure

### Technical Problem

It is an object of the present disclosure to provide a new low-melting conjugate fiber which has a low content of a cyclic compound acting as a foreign substance and has an excellent adhesive force at a relatively low temperature of 180°C or lower.

Another object of the present disclosure is to provide a new low-melting conjugate fiber which is capable of increasing the replacement cycle of a pack because of a low content of a cyclic compound acting as a foreign substance in a resin

Another object of the present disclosure is to provide a conjugate fiber excellent in thermal fusion at a low temperature.

Another object of the present disclosure is to provide a conjugate fiber capable of improving the problem of adhesion between adjacent fibers due to a low glass transition temperature of a binder fiber during a drawing process by using a copolymerization component that makes the glass transition temperature to be 60°C or higher.

Another object of the present disclosure is to provide a low-melting conjugate fiber which hardly lowers the adhesion strength even in a usual high-temperature environment.

Conventional polymerization of polyester with anhydrous phthalic acid as a copolymerization component has a problem in that coloration materials are accumulated due to thermal decomposition and side reaction, resulting in poor color. In contrast, the use of 2-methyl-1,3-propanediol, a linear aliphatic compound, produces fewer problems of poor color due to side reactions. Accordingly, another object of the present disclosure is to provide a new low-melting conjugate fiber with a low Color-b value, which is a value representing yellowing.

The above and other objects of the present disclosure can be achieved by the present disclosure described in detail below.

### Technical Solution

The present disclosure provides a low-melting conjugate fiber prepared by complex radiation of a general polyester as a core component; and a copolymer polyester resin for a low-melting binder prepared by copolymerizing an acid component composed of terephthalic acid and isophthalic acid or an ester-forming derivative thereof as a sheath component, and a diol component composed of 2-methyl-1,3-propanediol, diethylene glycol, and ethylene glycol.

In addition, the present disclosure provides a low-melting conjugate fiber characterized in that the diol component includes 1 to 50 mol% of 2-methyl-1,3-propanediol, 1 to 20 mol% of diethylene glycol, and 1 to 40 mol% of isophthalic acid based on the mole of the ester in the copolymer polyester.

In addition, the present disclosure provides a low-melting conjugate fiber prepared by complex radiation of a general polyester as a core component; and a copolymer polyester resin for a low-melting binder prepared by copolymerizing an acid component composed of terephthalic acid or an ester-forming derivative thereof as a sheath component, and a diol component composed of 2-methyl-1,3-propanediol and ethylene glycol.

In addition, the present disclosure also provides a low-melting conjugate fiber in which the 2-methyl-1,3-propanediol is added in an amount of 20 to 50 mol% based on the mole of the copolymer polyester.

In addition, the present disclosure provides a low-melting conjugate fiber in which the copolymer polyester resin further includes a polyfunctional component in the range of 50 to 10,000 ppm with respect to the copolymer polyester to enhance intermolecular bonding.

In addition, the present disclosure provides a low-melting conjugate fiber, in which the polyfunctional component is selected from the group consisting of polycarboxylic acid, polyol, polyoxycarboxylic acid, tremolitic acid, trimeric acid, 3,3,4,4-benzophenonetetracarboxylic acid, 1,2,3,4-butanetetracarboxylic acid and derivatives thereof, glycerin, trimethylol propane, pentaerythritol, and sorbitol.

In addition, the present disclosure provides a low-melting conjugate fiber prepared by complex radiation of a general polyester as a core component; and a copolymer polyester resin for a low-melting binder prepared by copolymerizing an acid component composed of terephthalic acid or an ester-forming derivative thereof as a sheath component, and a diol component composed of 2-methyl-1,3-propanediol, diethylene glycol and ethylene glycol.

In addition, the present disclosure also provides a low-melting conjugate fiber in which the 2-methyl-1,3-propanediol is added in an amount of 10 to 50 mol% based on the molar amount of the copolymer polyester.

In addition, the present disclosure provides a low-melting conjugate fiber further including 1 to 1,000 ppm of Ph-P composite heat stabilizer of the following formula based on the phosphorus (P) content in the condensation polymerization reaction:

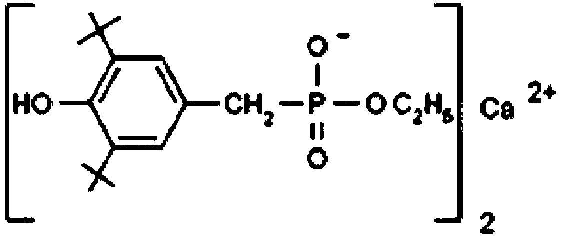

In addition, the present disclosure provides a low-melting conjugate fiber in which the resin further includes a polyfunctional component in the range of 10 to 10,000 ppm with respect to the copolymer polyester to enhance intermolecular bonding.

In addition, the present disclosure provides a low-melting conjugate fiber, in which the polyfunctional component is selected from the group consisting of polycarboxylic acid, polyol, polyoxycarboxylic acid, trimellitic acid, trimitic acid, 3,3,4,4-benzophenonetetracarboxylic acid, 1,2,3,4-butanetetracarboxylic acid and derivatives thereof, glycerin, trimethylol propane, pentaerythritol, and sorbitol.

### Advantageous Effects

The present disclosure produces an effect providing a polyester-based binder conjugate fiber which has a low content of a cyclic compound acting as a foreign substance and has an excellent adhesive force at a relatively low temperature of 180°C or lower, is capable of increasing the replacement cycle of a pack because of a low content of a cyclic compound acting as a foreign substance in a resin, and is excellent in thermal fusion at a low temperature.

### Best Mode

The present disclosure relates to a low-melting conjugate fiber, and more particularly to a copolymer polyester for low-melting binder excellent in thermal adhesion property and having a low content of a cyclic compound in a resin. The present disclosure also includes a conjugate fiber for a polyester binder prepared from the copolymer polyester for a binder of the present disclosure.

The present disclosure provides a binder conjugate fiber for lowing melting adhesion, which plays a role as thermally bonding fibers during manufacture of an automobile interior product, or a molding nonwoven fabric, i.e., acting as a binder. The conjugate fiber has a glass transition temperature (Tg) of 60°C or higher and retains its adhesive strength even at a high temperature (100°C to 130°C).

The conventional sheath-core type binder conjugate fiber according to the prior art lowers the crystallization by copolymerizing the rigid chain or the bending molecular chain to drop a melting point. In this case, not only the strength of the fiber is lowered due to the deterioration of crystallization or disappearance, but also no crystallization occurs, so that no melting point exists, leaving only the softening temperature. However, since the softening temperature exists over a wide temperature range, usually 20 to 60°C or higher, rather than a narrow temperature range such as melting point, in order to thermally adhere the copolymer, there is a drawback in that it is required to be processed at a temperature 10 to 20°C higher than the final temperature of the softening temperature.

In the present disclosure, the 2-methyl-1,3-propanediol is copolymerized to have a glass transition temperature of 60°C or higher to increase the productivity in the manufacturing process and to prevent fusion at the time of product transportation. In addition, since the thermal property is very similar to isophthalic acid and the thermal adhesive force at a low temperature is excellent, it is possible to lower the production cost when replacing isophthalic acid which is relatively expensive, and the cyclic compound acting as a foreign substance is not prepared, thereby increasing the replacement cycle of a pack.

The copolymer polyester resin for a low-melting binder according to the present disclosure is prepared by copolymerizing an acid component composed of terephthalic acid and isophthalic acid or an ester-forming derivative thereof; and a diol component composed of 2-methyl-1,3-propanediol, diethylene glycol, and ethylene glycol. It is preferable that the diol component includes 1 to 50 mol% of 2-methyl-1,3-propanediol, 1 to 20 mol% of diethylene glycol, and 1 to 40 mol% of isophthalic acid, based on the mole of the ester in the copolymer polyester.

The 2-methyl-1,3-propanediol used in the present disclosure is a polymer in which a methyl group is bonded to a second carbon to facilitate the rotation of a polymer main chain and acts as a polymer terminal portion, thereby widening the free space between the main chains, and increasing the overall flowability of molecular chains. This makes the polymer irregular and has the same thermal properties as isophthalic acid. By enhancing elasticity due to the flexible molecular chains present in the polymer main chain, it plays a role as improving tear properties during nonwoven binding. At this time, the content of the 2-methyl-1,3-propanediol is preferably 1 to 50 mol% based on the mole of the ester in the copolymer polyester. When the content is less than 1 mol%, a polyester resin that inhibits the decline in a melting point and formation of a cyclic compound cannot be obtained. When the content is 50 mol% or higher, the crystallization is sufficiently lowered so that the effect beyond what is predicted cannot be obtained. Rather, when the content is excessively added, it acts as a main component in the diol component, thereby causing an adverse effect of increasing the crystallization.

The content of the diethylene glycol is preferably 1 to 20 mol% based on the ester mol. When the content is less than 1 mol%, a polyester resin which inhibits the decline in a melting point and the formation of a cyclic compound cannot be obtained. When the content is 20 mol% or higher, the glass transition temperature is lowered, which may lead to a problem of change of the fiber over time during radiation.

The content of the isophthalic acid is preferably 1 to 40 mol% based on the mole of the ester. When the content is less than 1 mol%, a desired polymer having a lowered melting point and a glass transition temperature of 60°C or higher cannot be obtained. When the content is 40 mol% or higher, the adverse effect of increasing crystallization is produced. Moreover, it excessively produces a cyclic compound acting as a foreign substance, thereby reducing radioactivity and shortening a pack replacement cycle.

The polyester-based binder conjugate fiber according to the present disclosure is characterized in that it is produced by complex radiation of a general polyester as a core component and a copolymer polyester resin for a binder as a sheath component.

When the copolymer polyester obtained by copolymerization of the acid component and the diol component is used as a sheath component of the sheath-core type binder fiber, heat adhesion can be performed at a low temperature range similar to the temperature applied to conventional binder fibers. Moreover, even when the glass transition temperature is 60°C or higher and the durability and the form stability are required in a high temperature atmosphere such as an automobile interior product, the strength is maintained and the molding nonwoven fabric can prevent sagging under a high temperature atmosphere.

As described above, the polyester-based binder fiber according to the present disclosure uses a copolymer component which has a small content of a cyclic compound derived from isophthalic acid and has a glass transition temperature of 60°C or higher, it is possible to prevent lowering of productivity due to occurrence of adhesion between adjacent fibers in the process due to a delay in the rate of change of the fibers due to a low glass transition temperature during a drawing process after radiating binder fibers. There is an advantage that the thermal adhesive force at low temperature is excellent and the strength of the nonwoven fabric hardly decreases at a high temperature.

The copolymer polyester resin for a low-melting binder according to another embodiment of the present disclosure may be produced by copolymerization of an acid component composed of terephthalic acid or an ester forming derivative thereof and a diol component composed of 2-methyl-1,3-propanediol and ethylene glycol.

Herein, the methyl group of the second carbon of 2-methyl-1,3-propanediol facilitates the rotation of the polymer main chain and acts as a terminal portion of the polymer, thereby widening the free space between the main chains. This shows that the meta-structure of isophthalic acid has the same effect as forming a bending structure in the polymer main chain to prevent it from becoming a crystalline polymer and having an amorphous molecular structure. Accordingly, it functions very effectively in lowering the melting temperature of the polymer and destroying the crystallization. Meanwhile, the lower the melting temperature as compared with an input amount and the lower the glass transition temperature, the more effective the copolymerization component. In the case of 2-methyl-1,3-propanediol, the effect of lowering the melting temperature is large, but the glass transition temperature is not significantly lowered. Thus, a glass transition temperature of 65°C or higher is exhibited even when the high content is introduced and it becomes an amorphous polymer. Accordingly, it not only enables heat adhesion between fibers even at a low process temperature, but also has excellent form stability even at a high temperature of 100 to 130°C after the production of nonwoven fabrics. In addition, the thermal properties are very similar to isophthalic acid, but the production cost can be lowered when the isophthalic acid, which is relatively expensive, is replaced and used.

As another example of the present disclosure, the copolymer polyester-based binder fiber may be a binder conjugate fiber in which a general polyester as a core component and a copolymer polyester as a sheath component are mixed, in which the copolymer polyester is obtained by copolymerizing an acid component composed of terephthalic acid or an ester-forming derivative thereof and a diol component composed of 2-methyl-1,3-propanediol and ethylene glycol, and in which the content of the 2-methyl-1,3-propanediol is preferably 20 to 50 mol% based on the mole of the ester in the copolymer polyester. If the content is less than 20 mol%, the melting point is not sufficiently lowered to obtain a desired polyester resin. When the content is 50 mol% or higher, the crystallization is sufficiently lowered, and the effect beyond what is predicted cannot be obtained. Rather, when the content is excessively added, it acts as a main component in the diol component, thereby causing an adverse effect of increasing the crystallization.

Meanwhile, as another example of the present disclosure, the polyfunctional component used in the production of the copolymer polyester is preferably selected from the group consisting of polycarboxylic acid, polyol and polyoxycarboxylic acid, and in particular, trimellitic acid, trimesic acid, 3,3',4,4'-benzophenonetetracarboxylic acid, 1,2,3,4-butanetetracarboxylic acid and derivatives thereof such as acid esters and acid anhydrides thereof, glycerin, pentaerythritol, and sorbitol. At this time, the polyfunctional component is used to lower the reaction temperature during the condensation polymerization of a binder according to the present disclosure, to shorten the reaction time to improve color defects, and to improve the workability in the case of radiation and drawing into a fiber. 5010,000 ppm, more preferably, 501,000 ppm is added to each of the copolymer polyester components. At this time, if the added amount of the polyfunctional component is less than 10 ppm, the desired role of a crosslinking agent cannot be attained. If the added amount exceeds 10,000 ppm, rapid crosslinking phenomenon causes problems in polymerization, radiation, and drawing.

When the copolymer polyester including the above-mentioned diol component and polyfunctional component is used as a sheath component of sheath-core type binder fibers, it is preferable to use heat adhesion at a low temperature in a range similar to the temperature applied to conventional binder fibers In addition, when the glass transition temperature is 65°C or higher, the strength is maintained even when durability and form stability are required in a high-temperature atmosphere exposed to the sun for a long time in the outdoors, such as headliner products for automobile interiors. In the case of nonwoven fabrics for molding, the sagging phenomenon can be prevented even under a high temperature atmosphere.

The conjugate fiber according to another embodiment of the present disclosure may use a resin prepared by copolymerizing an acid component composed of terephthalic acid or an ester-forming derivative thereof as a material for forming a sheath component, and a diol component composed of 2-methyl-1,3-propanediol, diethylene glycol, and ethylene glycol.

When the resin is prepared by using the 2-methyl-1,3-propanediol, it is not involved in the production of a cyclic compound, which is a side reaction product, so that the replacement cycle of a pack during the radiation process can be increased and productivity can be improved as compared with the case of using isophthalic acid.

In addition, the methyl group of the second carbon of 2-methyl-1,3-propanediol facilitates the rotation of a polymer main chain and acts as a polymer terminal portion, thereby widening the free space between the main chains. Accordingly, it not only enables heat adhesion between fibers even at a low process temperature, but also has excellent form stability even at a high temperature of 100 to 130°C after the production of nonwoven fabrics. However, although the effect of lowering the melting temperature is large, it does not significantly lower the glass transition temperature, and it exhibits a high glass transition temperature of 65°C or higher even when it becomes an amorphous polymer when used solely. Higher glass transition temperatures result in better durability but have stiff tactile properties and are not suitable for nonwoven fabrics or padding uses that require a soft feel. Meanwhile, when the copolymerization is carried out using diethylene glycol, the glass transition temperature drop phenomenon is large, so that a resin having a desired glass transition temperature can be prepared by adjusting the input amount of diethylene glycol. Accordingly, when the binder fiber of the present disclosure is used, it is possible to produce a nonwoven fabric having excellent heat bonding at a low temperature and soft feel after adhesion. In addition, the thermal properties are very similar to isophthalic acid, but the production cost can be lowered when the isophthalic acid, which is relatively expensive, is replaced and used.

The conjugate fiber is a binder fiber including a general polyester as a core component and a copolymer polyester as a sheath component, in which the copolymer polyester is obtained by copolymerizing an acid component composed of terephthalic acid or an ester-forming derivative thereof and a diol component composed of 2-methyl-1,3-propanediol, diethylene glycol, and ethylene glycol. The content of the 2-methyl-1,3-propanediol is preferably 1 to 50 mol% based on the mole of the ester in the copolymer polyester. When the content is less than 1 mol%, the melting point is not sufficiently lowered to obtain a desired polyester resin. When the content is 50 mol% or higher, the crystallization is sufficiently lowered, and thus the effect beyond what is predicted cannot be obtained. Rather, when the content is excessively added, it acts as a main component in the diol component, thereby causing an adverse effect of increasing the crystallization. The content of the diethylene glycol is preferably 1 to 25 mol% based on the ester mol. When the content is less than 1 mol%, a polyester resin which inhibits the decline in a melting point and the formation of a cyclic compound cannot be obtained. When the content is 25 mol% or higher, the glass transition temperature is lowered to 55°C or lower, which may lead to a problem of change of the fiber over time during radiation.

In the present disclosure, a Ph-P composite heat stabilizer represented by the following formula can be used to increase heat stability. The input amount is preferably 1 to 1,000 ppm with respect to the copolymer polyester.

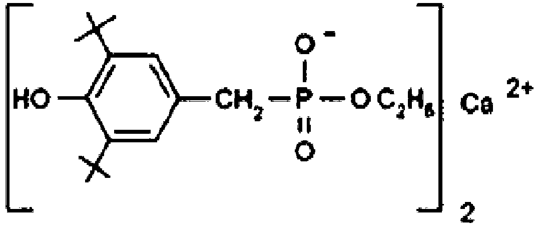

If the added amount of the heat stabilizer is 1 ppm, it is not enough to improve a desired heat stability. If 1,000 ppm or more is added, a problem of reactivity decline would occur.

Meanwhile, the polyfunctional component used in the production of the copolymer polyester of the present disclosure is selected from the group consisting of polycarboxylic acid, polyol and polyoxycarboxylic acid, and in particular, trimellitic acid, trimesic acid, 3,3',4,4'-benzophenonetetracarboxylic acid, 1,2,3,4-butanetetracarboxylic acid and derivatives thereof such as acid esters and acid anhydrides thereof, glycerin, pentaerythritol and sorbitol. At this time, the polyfunctional component is used to lower the excessive temperature rise of a resin due to exothermic reaction during the condensation polymerization of a binder according to the present disclosure, to shorten the reaction time to improve color defects, and to improve the workability in the case of radiation and drawing into a fiber. It is preferable that it includes 10 to 10,000 ppm with respect to the respective copolymer polyester component. However, it is advantageous that the melt viscosity is not too high in accordance with the use of adhesion, and thus more preferably, 50 to 3,000 ppm is added. At this time, if the added amount of the polyfunctional component is less than 10 ppm, the desired role of a crosslinking agent cannot be attained. If the added amount exceeds 10,000 ppm, rapid crosslinking phenomenon causes problems in polymerization, radiation and drawing.

Hereinafter, the present disclosure will be described in more detail by way of examples, but the scope of the present disclosure is not limited thereto.

### Detailed Description of the Embodiments

Examples 1 to 3: Preparation of copolymer polyester resin for low-melting binder

Terephthalic acid and ethylene glycol were added to an ester reactor and reacted at a temperature of 258°C by a conventional method to prepare an oligomer having a reaction rate of 96%. 2-methyl-1,3-propanediol was added per content to the obtained oligomer based on the mole of polyethylene terephthalic acid in the presence of a conventional transesterification catalyst, and the transesterification reaction was carried out at 250°C. A conventional polycondensation catalyst was added to the esterification oligomer thus obtained, and then the polycondensation reaction was carried out by raising the temperature up to 280°C while gradually reducing the pressure so that the final decompression rate became 0.1 mmHg. The performance of the thus-prepared polyester resin was evaluated as described above, and the results are shown in Table 1 below.

### Examples 4 to 6: Preparation of polyester-binder conjugate fiber

Terephthalic acid and ethylene glycol were added to an ester reactor and reacted at a temperature of 258°C by a conventional method to prepare an oligomer having a reaction rate of 96%. To the oligomer thus obtained, two components in different content ratio of isophthalic acid and 2-methyl-1,3-propanediol are added, so that a mol% of adding two components could reach 30 mol% based on the polyethylene terephthalic acid. In addition, 15 mol% of diethylene glycol was added as a diol component. A conventional transesterification catalyst was also added to carry out a conventional transesterification reaction at 250°C. A conventional polycondensation catalyst was added to the esterification oligomer thus obtained, and then the polycondensation reaction was carried out by raising the temperature up to 280°C while gradually reducing the pressure so that the final decompression rate became 0.1 mmHg.

A sheath-core type polyester binder fiber having 4 denier of monodenia was produced by using the copolymer polyester chip thus prepared as a sheath component and a conventional polyethylene terephthalic acid chip as a core component. These fibers were cut into fiber lengths of 51 mm and subjected to mechanical crimping. Thereafter, cotton mixing was carded in a weight ratio of 50:50 with a conventional polyethylene terephthalic acid in a roller carding machine, and heat adhesion was performed at 175°C for 1 minute. The properties of the binder fiber thus obtained were measured as described above, and the results are shown in Table 1 below.

### Comparative Examples 1 to 3: Production of copolymer polyester resin for low-melting binder

Except that isophthalic acid, but not 2-methyl-1,3-propanediol, was added per content, these examples were performed in the same manner as Examples 1 to 3. The performance of the thus-prepared polyester resin was evaluated as described above, and the results are shown in Table 1 below.

### Comparative Examples 4 to 5: Production of polyester binder conjugate fiber

Except that isophthalic acid, but not 2-methyl-1,3-propanediol, was added per content, these examples were performed in the same manner as Examples 4 to 6. As the composition that can be said to be one of the resin compositions of conventional polyester-based binder fibers, the performance of the resin was evaluated in the same manner as described above. The results are shown in Table 1 below.

**Table 1**

| | Type | MePDO | IPA | DEG | IV | Melting point | Softening temperature | Glass transition temperature | Room temperature adhesive force | Cyclic compound |
|---|---|---|---|---|---|---|---|---|---|---|
| | Unit | Mol% | Mol% | Mol% | dl/g | °C | °C | °C | kg | Wt% |
| Examples | 1 | 10 | - | - | 0.68 | 235.3 | - | 73.5 | - | - |
| | 2 | 20 | - | - | 0.67 | 210.5 | - | 71.2 | - | - |
| | 3 | 30 | - | - | 0.65 | 198.1 | - | 68.7 | - | - |
| | 4 | 10 | 20 | 15 | 0.69 | - | 125 | 60.5 | 65 | 0.36 |
| | 5 | 20 | 10 | 15 | 0.68 | - | 120 | 60.7 | 58 | 0.17 |
| | 6 | 30 | - | 15 | 0.72 | - | 122 | 60.8 | 71 | - |
| Comparative Examples | 1 | - | 10 | - | 0.69 | 232.5 | - | 74.2 | - | 0.25 |
| | 2 | - | 20 | - | 0.65 | 208.6 | - | 71.6 | - | 0.41 |
| | 3 | - | 30 | - | 0.68 | 195.7 | - | 70.6 | - | 0.73 |
| | 4 | - | 30 | 15 | 0.66 | - | 135 | 61.3 | 68 | 0.53 |
| | 5 | - | 40 | 15 | 0.61 | - | 115 | 58.4 | 70 | 0.75 |

| | | | | | | | | | | |
|---|---|---|---|---|---|---|---|---|---|---|
| MePDO: 2-methyl-1,3-propanediol, IPA: isophthalic acid DEG: Diethylene glycol | | | | | | | | | | |

### Examples 7 to 10: Production of polyester resin

The amount use of each component was determined in the composition shown in Table 2 below. Terephthalic acid and ethylene glycol were added to an ester reactor and reacted at a temperature of 258°C by a conventional method to prepare an oligomer having a reaction rate of 96%. 2-methyl-1,3-propanediol was added per content to the obtained oligomer based on the mole of polyethylene terephthalic acid. In the presence of 1000 ppm and a conventional transesterification catalyst, the transesterification reaction was carried out for trimethylol propane (hereinafter, "TMP") as a polyfunctional component at 250°C. A conventional polycondensation catalyst was added to the esterification oligomer thus obtained, and then the polycondensation reaction was carried out by raising the temperature up to 280°C while gradually reducing the pressure so that the final decompression rate became 0.1 mmHg. The performance of the thus-prepared polyester resin was evaluated as described above, and the results are shown in Table 3 below.

### Example 11: Production of polyester resin

Except that trimethylol propane, which is a polyfunctional component, was not used, the example was performed with the same composition as Example 10 to obtain a copolymer polyester. The properties thereof were measured as described above, and the results are shown in Table 3 below.

### Comparative Examples 6 to 9: Use of isophthalic acid as a copolymerization component

As shown in the following Table 2, isophthalic acid, but not 2-methyl-1,3-propanediol, was added per amount, and no polyfunctional component was added. In addition, the polymerization was carried out under the same conditions as in Examples 1 to 4. The performance of the thus-prepared polyester resin was evaluated as described above, and the results are shown in Table 3 below.

### Comparative Examples 10 to 11: Use of diethylene glycol instead of 2-methyl-1,3-propanediol

As shown in the following Table 2, diethylene glycol, but not 2-methyl-1,3-propanediol, was added and no polyfunctional component was added. In addition, the polymerization was carried out under the same conditions as in Examples 7 to 10. The performance of the thus-prepared polyester resin was evaluated as described above, and the results are shown in Table 3 below.

**Table 2**

| | Type | MePDO | IPA | DEG | TMP |
|---|---|---|---|---|---|
| | Unit | mol% | mol% | mol% | ppm |
| Examples | 7 | 10 | - | - | 1000 |
| | 8 | 20 | - | - | 1000 |
| | 9 | 30 | - | - | 1000 |
| | 10 | 40 | - | - | 1000 |
| | 11 | 40 | - | - | - |
| Comparative Examples | 6 | - | 10 | - | - |
| | 7 | - | 20 | - | - |
| | 8 | - | 30 | - | - |
| | 9 | - | 40 | - | - |
| | 10 | - | - | 30 | - |
| | 11 | - | 30 | 15 | - |

| | | | | | |
|---|---|---|---|---|---|
| MePDO: 2-methyl-1,3-propanediol, TMP: trimethylolpropane IPA: isophthalic acid, DEG: diethylene glycol | | | | | |

**Table 3**

| | Type | IV | Melting point | Softening temperature | Glass transition temperature | Color-b | Reaction time | Room temperature adhesive force | High temperature adhesive force | Cyclic compound |
|---|---|---|---|---|---|---|---|---|---|---|
| | Unit | dl/g | °C | °C | °C | - | hr | kg | kg | Wt% |
| Examples | 7 | 0.68 | 235.3 | - | 76.5 | 2.5 | 1.8 | - | - | - |
| | 8 | 0.67 | 210.5 | - | 74.6 | 2.8 | 2.3 | - | - | - |
| | 9 | 0.65 | 196.3 | - | 72.1 | 3.5 | 2.7 | 63 | 3.7 | - |
| | 10 | 0.66 | - | 120 | 70.4 | 3.1 | 2.5 | 71 | 4.1 | - |
| | 11 | 0.60 | 196.1 | 120 | 70.3 | 4.9 | 3.1 | 67 | 3.6 | - |
| Comparative Examples | 6 | 0.69 | 232.5 | - | 74.2 | 2.9 | 2.3 | - | - | 0.25 |
| | 7 | 0.65 | 208.6 | - | 71.6 | 4.7 | 2.6 | - | - | 0.41 |
| | 8 | 0.68 | 195.2 | - | 71.0 | 5.8 | 3.4 | 61 | 3.4 | 0.73 |
| | 9 | 0.68 | - | 128 | 70.1 | 7.2 | 3.9 | 69 | 3.7 | 0.86 |
| | 10 | 0.59 | 191.7 | - | 57.7 | 4.1 | 2.5 | 56 | 1.8 | - |
| | 11 | 0.66 | - | 135 | 61.3 | 6.2 | 3.6 | 68 | 2.2 | 0.53 |

### Examples 12 to 14

Terephthalic acid and ethylene glycol were added to an ester reactor and reacted at a temperature of 258°C by a conventional method to prepare an oligomer having a reaction rate of 96%. 2-methyl-1,3-propanediol, diethylene glycol, and ethylene glycol were added per content to the obtained oligomer based on the mole of polyethylene terephthalic acid, together with a Ph-P composite heat stabilizer and a conventional transesterification catalyst, to carry out the transesterification reaction at 250°C. Trimethylol propane (TMP), a kind of a polyfunctional reactor, and a conventional polycondensation catalyst were added to the esterification oligomer thus obtained, and then the polycondensation reaction was carried out by raising the temperature up to 280°C while gradually reducing the pressure so that the final decompression rate became 0.1 mmHg. The performance of the thus-prepared polyester resin was evaluated as described above, and the results are shown in Table 4 below.

### Comparative Examples 12 to 14

In order to verify the effects of the heat stabilizer and the polyfunctional reactor, the diol component input ratio was added in the same manner as in Example 12, and was polymerized in the same manner as in Examples 12 to 14, except that the heat stabilizer type (Ph-P composite system or P system as a general phosphorus heat stabilizer) and a polyfunctional reactor were added or not added as in Table 4. The performance of the thus-prepared polyester resin was evaluated as described above, and the results are shown in Table 4 below.

### Comparative Examples 15 to 17

Except that isophthalic acid, but not 2-methyl-1,3-propanediol, was added per content and the heat stabilizer type and a polyfunctional reactor were added or not added as in Table 4, it was polymerized in the same manner as Examples 1 to 3. The performance of the thus-prepared polyester resin was evaluated as described above, and the results are shown in Table 4 below.

**Table 4**

| | Type | Diol component input amount MPD/DEG/EG | IPA | TMP | Heat stabilizer | IV | B value | Feel | Glass transition temperature | Reaction time | Cyclic compound |
|---|---|---|---|---|---|---|---|---|---|---|---|
| | Unit | Mol% | mol% | ppm | ppm | dl/g | | | °C | hr | Wt% |
| Examples | 12 | 20/20/60 | - | 750 | Ph-P composite system | 0.68 | 2.5 | ○ | 61.4 | 2.5 | - |
| | 13 | 25/15/60 | - | 500 | Ph-P composite system | 0.65 | 1.8 | Δ | 63.5 | 2.7 | - |
| | 14 | 15/25/60 | - | 1000 | Ph-P composite system | 0.66 | 2.9 | ○ | 55.7 | 2.1 | - |
| Comparati ve Examples | 12 | 20/20/60 | - | - | Ph-P composite system | 0.68 | 2.8 | ○ | 61.5 | 3.8 | - |
| | 13 | 20/20/60 | - | 750 | P system | 0.63 | 3.3 | ○ | 60.9 | 3.1 | - |
| | 14 | 20/20/60 | - | - | P system | 0.61 | 3.2 | ○ | 61.2 | 5.3 | - |
| | 15 | 0/15/85 | 30 | - | P system | 0.63 | 4.7 | X | 65.7 | 4.5 | 0.67 |
| | 16 | 0/10/90 | 35 | 500 | P system | 0.71 | 5.3 | X | 67.1 | 3.1 | 0.73 |
| | 17 | 0/20/80 | 20 | 750 | Ph-P composite system | 0.68 | 3.8 | Δ | 63.0 | 2.5 | 0.32 |

| | | | | | | | | | | | |
|---|---|---|---|---|---|---|---|---|---|---|---|
| MPD: 2-methyl-1,3-propanediol, DEG: diethylene glycol, EG: ethylene glycol IPA: isophthalic acid, TMP: trimethylolpropane | | | | | | | | | | | |

The evaluation items shown in the above examples and comparative examples were performed as follows.
1. Measurement of cyclic compound content: The mol% of the additive of the copolymer polyester was determined by dissolving the copolymer polyester in trifluoroacetic acid and using a DRX-300 proton nuclear magnetic resonance apparatus (1H NMR) of Bruker.
2. Measurement of melting point/glass transition temperature and the softening behavior: They were measured using a thermal differential scanning calorimeter (Perkin Elmer, DSC-7). If the heat absorption peak does not exist, that is, if a melting point does not exist, the softening behavior was measured using the dynamic thermal characterizer (Perkin Elmer, DMA-7; TMA mode).
3. Determination of intrinsic viscosity (IV): Copolymer polyester was dissolved in phenol/tetrachloroethane (weight ratio 50/50) to make a 0.5 wt% solution and measured at 35°C with a Ubbelohde viscometer.
4. Adhesive force at room temperature: The prepared thermosetting nonwoven fabric was fixed at a density of 2g/100cm², and the atmosphere temperature was measured at 25°C by the method of ASTM D1424 and the high temperature adhesive force was measured at 100°C (dry heat).
5. Tactile sensation: A relative evaluation was performed by touching with the hand. (⊚ (excellent), ○ (good), Δ (fair), × (poor))

As shown in Table 1, when Examples 1 to 3 using 2-methyl-1,3-propanediol are compared with Comparative Examples 1 to 3 using isophthalic acid, they have an intrinsic viscosity of at least about the same degree, or have a glass transition temperature of 60°C or higher. In addition, in the binder resin composition in Examples 4 to 6, it can be understood that the room temperature adhesive force is more than equivalent level as compared with one in Comparative Example 4, which was copolymerized only with isophthalic acid, and the output of a cyclic compound having a degree of polymerization of 2, which acts as a foreign substance, has been decreased.

In addition, as shown in Table 2 above, another embodiment of the present disclosure has at least an equivalent intrinsic viscosity as compared with Examples 1 to 4 using 2-methyl-1,3-propanediol and Comparative Examples 1 to 4 using isophthalic acid. It has a similar effect of lowering the melting temperature, and has a glass transition temperature of 65°C or higher. As can be understood from the results of the room temperature adhesive force and the high temperature adhesive force, it can be understood that the adhesion strength was excellent in Examples 7 to 10 using 2-methyl-1,3-propanediol and a polyfunctional component. When the copolymerization is carried out using diethylene glycol, the glass transition temperature drop phenomenon is large, indicating that the adhesive force at room temperature and the adhesive strength at high temperature are relatively low. When diethylene glycol is used, it is necessary to add additives that increase the intermolecular adhesive force. In addition, as compared with Comparative Examples 6 to 9 copolymerized using isophthalic acid, 2-methyl-1,3-propanediol is not involved in the formation of the cyclic dimer, which can contribute to lowering the content of a foreign substance in the polyester and increasing the pack replacement cycle. Meanwhile, as compared with Examples 10 and 11, it can be understood that there is an effect obtained by adding trimethylolpropane, which is one of the polyfunctional components. In case of Example 10 to which a polyfunctional component is added, the polycondensation reaction time is shortened than Example 11. Accordingly, the yellowing degree (Color-b value) was low. In general, Examples 7 to 10 show shorter reaction time and lower yellowing degree than Example 11 and Comparative Examples 7 to 11. As can be seen above, the use of 2-methyl-1,3-propanediol as a copolymerization component and addition of a polyfunctional component have the effect of improving the properties and productivity of the polyester resin for a binder.

As shown in Table 4 above, when Examples 12 to 14 using 2-methyl-1,3-propanediol were compared with Comparative Examples 12 to 15 using isophthalic acid, they were found to have an intrinsic viscosity of at least about the equivalent level. When 2-methyl-1,3-propanediol is added, the b value indicating the yellowing degree is lower, so the color is better and the feel is softer. As can be seen from the results of the room temperature adhesive force, even when polymerization was carried out using 2-methyl-1,3-propanediol, the adhesive force was an equivalent level. When Example 12 and Comparative Example 12 were compared, the intermolecular bonding was increased, the adhesive force was more excellent, and the reaction time was reduced when a polyfunctional reaction was added. In comparison of Example 12 and Comparative Example 13, when the Ph-P composite heat stabilizer was added, the b value was lower than that of the conventional P system heat stabilizer, and the color was good. In addition, isophthalic acid reacts with ethylene glycol to form a cyclic dimer, which acts as a foreign substance, thereby shortening the replacement cycle of a pack, and causing poor radioactivity. Moreover, there is a disadvantage in that the cost of isophthalic acid is high. Since 2-methyl-1,3-propanediol and diethylene glycol are not involved in the formation of a cyclic dimer, it contributes to lowering the content of a foreign substance in the polyester and increasing the replacement cycle of a pack, thereby producing an advantage of lowering the production costs because the price of raw materials is low.

It will be understood that various modifications and changes of the present disclosure can be easily performed by those skilled in the art, and that such modifications or changes are all included in the scope of the present disclosure.

## Claims

1. A low-melting conjugate fiber prepared by complex radiation of:
a general polyester as a core component; and a copolymer polyester resin for a low-melting binder prepared by copolymerizing an acid component composed of terephthalic acid and isophthalic acid or an ester-forming derivative thereof as a sheath component and a diol component composed of 2-methyl-1,3-propanediol, diethylene glycol, and ethylene glycol.

2. The low-melting conjugate fiber according to claim 1, wherein the diol component includes 1 to 50 mol% of 2-methyl-1,3-propanediol, 1 to 20 mol% of diethylene glycol, and 1 to 40 mol% of isophthalic acid based on the mole of the ester in the copolymer polyester.

3. A low-melting conjugate fiber prepared by complex radiation of a general polyester as a core component; and a copolymer polyester resin for a low-melting binder prepared by copolymerizing an acid component composed of terephthalic acid or an ester-forming derivative thereof as a sheath component and a diol component composed of 2-methyl-1,3-propanediol and ethylene glycol.

4. The low-melting conjugate fiber according to claim 3, wherein the 2-methyl-1,3-propanediol is added in an amount of 20 to 50 mol% based on the mole of the copolymer polyester.

5. The low-melting conjugate fiber according to claim 3 or 4, wherein the copolymer polyester resin further includes a polyfunctional component in the range of 50 to 10,000 ppm with respect to the copolymer polyester to enhance intermolecular bonding.

6. The low-melting conjugate fiber according to claim 5, wherein the polyfunctional component is selected from the group consisting of polycarboxylic acid, polyol, polyoxycarboxylic acid, trimellitic acid, trimesic acid, 3,3,4,4-benzophenonetetracarboxylic acid, 1,2,3,4-butanetetracarboxylic acid and derivatives thereof, glycerin, trimethylol propane, pentaerythritol, and sorbitol.

7. A low-melting conjugate fiber prepared by complex radiation of a general polyester as a core component; and a copolymer polyester resin for a low-melting binder prepared by copolymerizing an acid component composed of terephthalic acid or an ester-forming derivative thereof as a sheath component and a diol component composed of 2-methyl-1,3-propanediol, diethylene glycol and ethylene glycol.

8. The low-melting conjugate fiber according to claim 7, wherein the 2-methyl-1,3-propanediol is added in the range of 10 to 50 mol% based on the mole of the copolymer polyester.

9. The low-melting conjugate fiber according to claim 7, further comprising a Ph-P composite heat stabilizer having the following formula of 1 to 1,000 ppm based on the phosphorus (P) content in the condensation polymerization reaction:

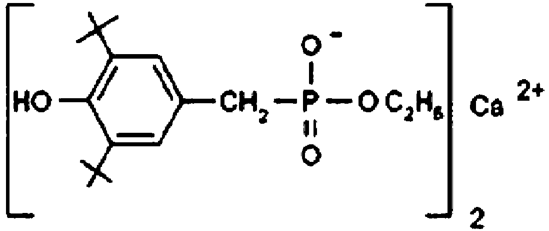

10. The low-melting conjugate fiber according to claim 7, wherein the resin further includes a polyfunctional component in the range of 10 to 10,000 ppm with respect to the copolymer polyester to enhance intermolecular bonding.

11. The low-melting conjugate fiber according to claim 10, wherein the polyfunctional component is selected from the group consisting of polycarboxylic acid, polyol, polyoxycarboxylic acid, trimellitic acid, trimesic acid, 3,3,4,4-benzophenonetetracarboxylic acid, 1,2,3,4-butanetetracarboxylic acid and derivatives thereof, glycerin, trimethylol propane, pentaerythritol, and sorbitol.
